# FASCICULE DE BREVET EUROPEEN

(11) **EP 1 872 931 B1**
(45) Date de publication et mention de la délivrance du brevet: **08.02.2012**
(21) Numéro de dépôt: 06425442.8
(22) Date de dépôt: 28.06.2006
(51) Int. Cl.: A43B 5/04, A43B 23/04, B29D 35/14

(54) **Chaussure de sport avec decoration par structure de surface**
Sportschuhwerk mit einer dekorativen Oberflächenstruktur
Sport footwear with decorative surface structure

(43) Date de publication de la demande: 02.01.2008
(73) Titulaire: LISA Lange International Sàrl, 1700 Fribourg (CH)
(72) Inventeur: Botter, Maurizio, 31044 Montebelluna (TV) (IT); Facchinelli, Annadora, 31044 Montebelluna (TV) (IT)
(74) Mandataire: Bugnion Genève

(56) Documents cités:
- EP-A- 1 444 908
- EP-A1- 1 574 144
- EP-A1- 1 584 251
- FR-A1- 2 587 884
- US-A- 3 945 135

## Description

L'invention concerne tout ou partie d'une chaussure de sport comprenant une décoration, et est particulièrement adaptée aux chaussures comprenant des parties relativement rigides pour planche de glisse telle que ski, surf ou chaussures de patinage, qui sont utilisées dans des environnements abrasifs. Elle concerne de plus aussi le procédé de fabrication d'une telle chaussure.

Les chaussures pour sports de glisse nécessitent un bon compromis entre les contraintes de confort et de rigidité, rigidité nécessaire afin de permettre à l'utilisateur de guider de manière précise l'engin de glisse et de ressentir la réponse de l'engin à ses sollicitations. Pour cela, les chaussures se composent en général de parties dans un matériau plastique rigide. La décoration de telles chaussures est souvent sobre et réalisée par un marquage à chaud sur la surface extérieure du plastique. Les décorations obtenues sont souvent endommagées par l'environnement abrasif lors de l'utilisation de la chaussure et dans le cas du ski ou du surf, elles subissent de plus des coups involontaires par les carres qui provoquent des rayures inesthétiques sur ces décorations, qui sont donc peu durables. De plus, un tel procédé de décoration est contraignant car il ajoute une étape supplémentaire et coûteuse au procédé de fabrication des chaussures de sport.

D'une manière plus générale, les procédés de décoration des chaussures de sport de l'art antérieur sont insatisfaisants, ce qui s'explique par la réunion d'un nombre important de contraintes techniques parmi lesquelles:
- la chaussure est destinée à un environnement abrasif et à une utilisation sportive entraînant des efforts importants subis par sa structure.
   Elle subit ainsi de nombreuses agressions extérieures qui rendent difficiles la disposition de décorations durables sur la chaussure ;
- en outre, la chaussure présente une surface complexe, non plane, ce qui ne facilite pas sa décoration ;
- la chaussure a de plus une structure complexe et coûteuse du fait des contraintes mécaniques et de confort et il n'est pas économiquement envisageable d'augmenter son coût de manière significative pour une contrainte supplémentaire d'ordre esthétique. Il n'est pas non plus envisageable de diminuer la rigidité et/ou le confort de la chaussure pour permettre de développer les solutions de décoration ;
- la chaussure doit aussi avoir un poids minimal pour optimiser son rendement et son coût. Des solutions de décoration qui entraîneraient une augmentation du poids de la chaussure conviendraient donc mal.

Pour répondre à ces contraintes techniques, d'autres solutions ont été envisagées.

La première solution, décrite dans le document EP1574144, consiste à disposer un support de décoration entre deux couches de la paroi d'une chaussure obtenue par une double injection, la seconde couche extérieure étant transparente pour rendre visible la décoration. Cette solution présente l'inconvénient de nécessiter une étape supplémentaire de placement d'un support de décoration entre les deux étapes d'injection de la chaussure, ce qui complique le procédé de fabrication habituel.

La seconde solution, décrite dans le document EP1584251, consiste à disposer une décoration sur une surface intérieure d'une partie transparente de la paroi de la chaussure. Cette solution présente le même inconvénient que la précédente : il faut une étape supplémentaire de décoration.

Enfin, d'autres décorations telles que décrites dans le document EP1444908, qui divulgue toutes les caractéristiques du préambule de la revendication 1, sont obtenues indirectement par la réalisation de nervures ou rainures dans des couches de chaussure, la fonction première de ces nervures ou rainures consistant en un renfort mécanique de la paroi de la chaussure. L'inconvénient de ces solutions provient du fait que le résultat esthétique est indirect et dicté par les contraintes mécaniques de la chaussure, ce qui ne permet pas de réaliser n'importe quel schéma esthétique.

Il existe donc un besoin de simplifier et améliorer les solutions existantes de décoration des chaussures de sport, ce qui est l'objet général de la présente invention.

Plus précisément, un premier objet de la présente invention consiste à proposer une chaussure de sport comprenant une décoration résistante aux contraintes imposées par l'utilisation de la chaussure de sport.

Un second objet de la présente invention consiste à proposer une chaussure de sport avec décoration dont le procédé de décoration est simple et sans surcoût.

Un troisième objet de la présente invention consiste à proposer une chaussure de sport avec décoration dont les performances de rigidité et de confort sont importantes.

Selon le concept de l'invention, la chaussure de sport comprend au moins une partie de paroi en matériau plastique transparent ou translucide comprenant au moins une surface d'une couche de la paroi non directement en contact avec l'extérieur présentant une structuration de surface particulière, qui forme une partie rugueuse délimitée par des surfaces lisses, visible depuis l'extérieur au travers de la paroi transparente ou translucide pour former une esthétique particulière tout en étant protégée des agressions extérieures. Ce concept permet ainsi de définir une nouvelle structure de chaussure qui répond à la fois aux contraintes techniques de performance mécanique, de confort, et de décoration des chaussures de sport.

L'invention est plus particulièrement définie par les revendications.

Ces objets, caractéristiques et avantages de la présente invention seront exposés en détail dans la description suivante de modes d'exécution particuliers faits à titre non-limitatif en relation avec les figures jointes parmi lesquelles :
La figure 1 illustre une vue d'une chaussure de ski intégrant une structure selon un mode d'exécution de l'invention ;
la figure 2 est une vue schématique d'une partie de paroi de chaussure selon un premier mode d'exécution de l'invention ;
la figure 3 est une vue schématique d'une partie de paroi de chaussure selon une variante du premier mode d'exécution de l'invention ;
la figure 4 est une vue schématique d'une partie de paroi de chaussure selon un second mode d'exécution de l'invention ;
la figure 5 est une vue schématique d'une partie de paroi de chaussure selon une première variante du second mode d'exécution de l'invention ;
la figure 6 est une vue schématique d'une partie de paroi de chaussure selon une seconde variante du second mode d'exécution de l'invention ;
la figure 7 est une vue schématique d'une partie de paroi de chaussure selon une troisième variante du second mode d'exécution de l'invention ;
la figure 8 est une vue schématique d'une partie de paroi de chaussure selon une quatrième variante du second mode d'exécution de l'invention ;
la figure 9 est une vue schématique d'une étape de fabrication d'une chaussure selon l'invention ;
la figure 10 est une autre vue schématique d'une étape de fabrication d'une chaussure selon l'invention.

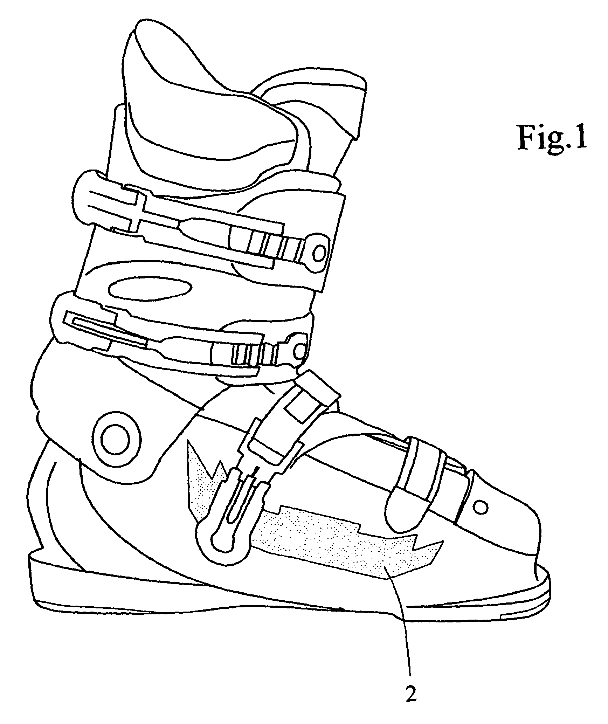

La figure 1 illustre l'implémentation d'un mode d'exécution de l'invention sur une chaussure de ski pour former une zone 2 sur la paroi latérale de la chaussure comprenant une esthétique particulière, formant ainsi une décoration de la chaussure.

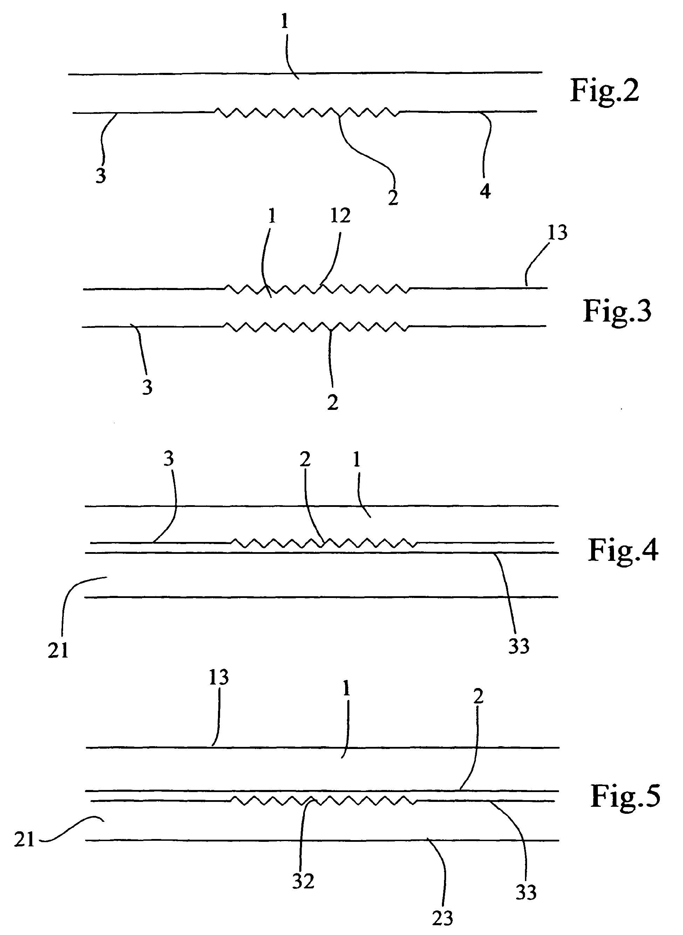

Les figures 2 à 10 illustrent schématiquement des modes d'exécution de la structure de la chaussure permettant d'atteindre par exemple le résultat illustré sur la figure 1.

Le premier mode de réalisation décrit ci-après en référence aux figures 2 et 3 concerne une paroi de chaussure comprenant une seule couche 1 d'un matériau plastique habituel, comme du polyuréthane de dureté 55 shd, transparent ou translucide, comprenant une partie 2 sur sa face intérieure 3 qui comprend un état ou structuration de surface particulier, non lisse. Sur le mode de réalisation particulier illustré sur la figure 2, la décoration 2 provient d'un procédé de sablage, d'usinage mécanique ou d'attaque chimique de la surface intérieure de la paroi 1 de la chaussure, de manière à obtenir une partie 2 légèrement rugueuse, qui se distingue des surfaces lisses 4 des autres parties de la face intérieure 3 de la paroi de la chaussure. La partie 2 peut avoir toute forme prédéfinie et est visible depuis l'extérieur grâce à la propriété transparente ou translucide au moins dans cette zone du matériau utilisé pour la paroi 1. Cette partie 2 possédant une structuration de surface particulière créée ainsi un effet esthétique tout en formant une paroi de chaussure répondant bien aux contraintes mécaniques de rigidité et de confort.

Selon le concept de l'invention, la partie 2 résulte d'une modification de la structuration de la surface d'une couche de la paroi de la chaussure, non directement en contact avec l'extérieur, pour créer un effet visuel. Nous entendons par structuration de la surface ou état de surface dans tout le texte une modification de la surface d'une couche de la paroi sur quelques centièmes de millimètre d'épaisseur, voire quelques dixièmes de millimètre dans le cas de parois épaisses, pour obtenir une surface non lisse, directement obtenue par la modification de la couche sans ajouter de la matière nouvelle, pour cumuler les avantages d'avoir un impact négligeable sur les performances mécaniques de la paroi de la chaussure, au contraire d'une nervure de renfort par exemple, tout en étant parfaitement visible à l'oeil nu et facile à réaliser pour créer facilement des effets esthétiques variés. Les dimensions ont été volontairement exagérées sur les figures schématiques pour faciliter la représentation de l'invention.

D'autre part, dans l'exemple illustré sur la figure 2, la partie 2 avec structuration de surface forme une partie rugueuse délimitée par des surfaces lisses 4. Toutefois, cette structuration de surface peut s'étendre sur toute la surface intérieure 3 de la paroi de la chaussure. En variante, plusieurs états de surface se différenciant à l'oeil nu peuvent être combinés dans des mêmes zones de la chaussure pour former d'autres aspects esthétiques.

Selon une variante de réalisation de l'invention illustrée sur la figure 3, une décoration 12 réalisée sur la face extérieure 13 de la paroi 1 de chaussure est au moins partiellement combinée à la partie 2, de manière à créer un effet de relief ou de profondeur attrayant, par la combinaison des deux décorations 2 et 12 dans des plans distincts sensiblement parallèles.

Sur le schéma illustré sur la figure 3, la décoration 12 est de même une partie rugueuse 12 obtenue par un état de surface non lisse de la surface extérieure 13 de la paroi de chaussure. Toutefois, toute autre solution de décoration de l'art antérieur pourrait aussi être combinée avec la décoration 2, pour offrir de même une décoration avec relief. Par exemple, la surface extérieure 13 pourrait comprendre un marquage, ou être obtenue par tout support de décoration appliqué sur la chaussure.

En variante de réalisation, la partie 2 avec structuration de surface peut avoir une forme particulière entourée de surfaces avoisinantes 4 lisses ou d'états de surface se distinguant à l'oeil nu pour former directement une décoration.

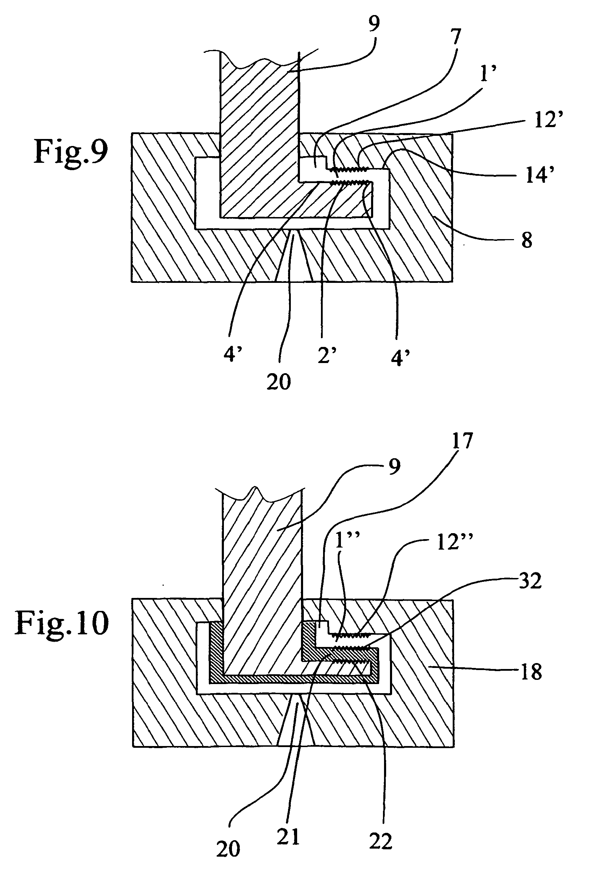

L'invention porte aussi sur un procédé de fabrication avantageux d'une telle chaussure de l'art antérieur, comprenant une étape d'injection de matériau plastique transparent ou translucide dans un moule de fabrication, illustré schématiquement sur la figure 9, comprenant une partie extérieure 8 et une partie intérieure 9 en forme de pied, délimitant un espace 7 dans lequel est injecté le matériau plastique de manière à prendre la forme de la partie de chaussure à fabriquer. Ce moule délimite notamment un espace 1' au-dessous duquel le moule intérieur 9 comprend un état de surface rugueux 2', et au-dessus duquel le moule extérieur 8 comprend un état de surface rugueux 12'. Le plastique injecté dans un tel moule forme une paroi 1 dont la zone correspondant à la zone 1' du moule comprend une décoration telle que représentée sur la figure 3. En remplaçant la partie 12' du moule par une surface lisse, la décoration telle que représentée sur la figure 2 serait obtenue.

Le procédé de fabrication précédent comprend en outre une étape de fabrication du moule comprenant la réalisation d'états de surface particuliers par sablage, usinage mécanique ou attaque chimique. Pour rappel, le sablage est une opération qui consiste à projeter des particules abrasives qui décapent en surface une zone à traiter. La profondeur obtenue, qui ne dépasse pas quelques dixièmes de millimètre, est principalement déterminée par la grosseur des particules et le temps de sablage. Ces états de surface particuliers peuvent s'appliquer sur toute surface et former toute forme et dessin, en protégeant les surfaces avoisinantes à l'aide d'un pochoir. L'invention ne porte pas sur le dessin en tant que tel. Lorsque le moule est fabriqué, il peut alors servir une multitude de fois pour fabriquer des séries de chaussures, selon un procédé de fabrication habituel, tout en formant automatiquement une décoration sur les chaussures, sans nécessiter un surcoût.

En remarque, une variante de réalisation moins avantageuse pourrait consister en la réalisation directe de la structuration de la surface 3 de la chaussure après sa fabrication, en appliquant un des procédés de sablage, ou autres, rappelés précédemment directement sur la surface interne lisse de la chaussure à traiter.

Ce premier mode de réalisation montre que l'invention permet d'atteindre les objets recherchés et présente les avantages suivants :
- comme la structuration de la surface de la paroi 2 est disposée sur la face intérieure 3 de la paroi de la chaussure, non directement en contact avec l'extérieur, elle est protégée des agressions extérieures par la paroi qui la recouvre;
- la réalisation de la décoration par état de surface ne nécessite aucune étape de décoration additionnelle, elle peut être obtenue par un procédé habituel d'injection, et nécessite seulement une légère modification du moule d'injection. Cette technique permet de définir facilement toute forme de décoration;
- cette décoration n'a pas d'impact sur le poids global ni sur les caractéristiques mécaniques de la chaussure, puisqu'elle n'affecte pas la géométrie des parois qui conservent globalement partout les bonnes performances de rigidité. L'invention permet d'obtenir une chaussure avec une structure aux performances mécaniques équivalentes à celles de l'art antérieur mais ayant en plus une décoration, avec une simple modification de sa structure ;
- l'invention est aussi adaptée à l'implémentation de nombreux effets esthétiques possibles, par exemple par la possibilité de combiner ce procédé de décoration selon l'invention avec les autres procédés existants.

Le second mode de réalisation de l'invention, illustré aux figures 4 à 8, implémente le concept de l'invention à la décoration de parties de chaussures dont la paroi est obtenue par l'association de deux couches de matériaux plastiques, comme c'est le cas avec l'utilisation du procédé de fabrication par bi-injection ou surinjection.

La figure 4 illustre ainsi une partie de chaussure dont la paroi comprend deux couches 1 et 21 superposées, soudées l'une à l'autre, volontairement détachées sur la représentation schématique pour favoriser leur visualisation. La couche 1 en contact avec l'extérieur est dans un matériau plastique transparent ou translucide et comprend une partie 2 avec une structuration de surface sur sa face intérieure 3. Cette couche 1 est similaire à la couche unique de la figure 2. Cette couche 1 est soudée à une seconde couche 21 dans un matériau plastique, qui peut être éventuellement coloré, et qui est destinée à venir en contact avec le pied de l'utilisateur, éventuellement par l'intermédiaire d'un chausson de confort intérieur. Le matériau plastique de cette seconde couche 21 adhère parfaitement à celui de la première couche 1, notamment au niveau de la partie non lisse 2, épousant la forme de son état de surface, même si cela n'est pas illustré par les figures pour des raisons de simplification.

La figure 5 illustre une variante de réalisation dans laquelle la partie 32 avec structuration de surface n'est plus formée sur la face intérieure 3 de la couche extérieure 1 de la paroi mais sur la face de la couche intérieure 21 soudée avec cette surface 3. La couche extérieure 1 étant transparente ou translucide, la structuration particulière de la surface de cette surface intermédiaire 33 de la couche intérieure 21 de la paroi de la chaussure produit un effet visible depuis l'extérieur.

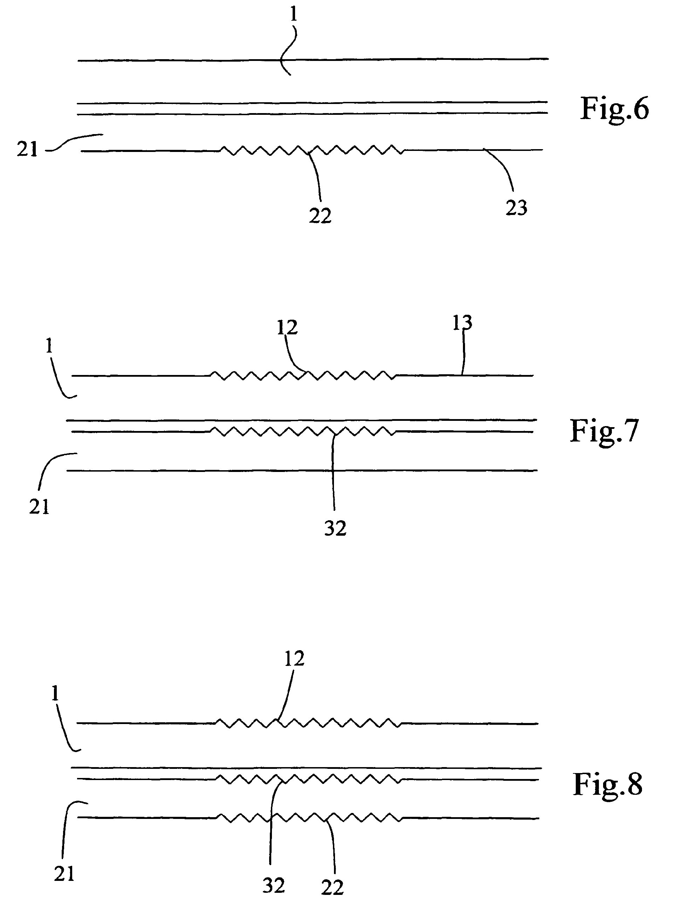

Enfin, la figure 6 illustre une seconde variante dans laquelle la structuration de la surface non lisse 22 est réalisée sur la face 23 orientée vers le pied de l'utilisateur ou un chausson de confort de la couche intérieure 21 de la paroi de la partie de chaussure de sport. Dans cette variante, les deux couches 1 et 21 de la paroi sont dans un matériau transparent ou translucide afin de rendre visible la décoration 22 depuis l'extérieur.

Ainsi, comme cela a été illustré précédemment, l'invention peut être mise en oeuvre en réalisant une modification d'un état de surface de n'importe quelle partie de surface d'une des couches de matériau plastique de la paroi de la chaussure non directement en contact avec l'extérieur, c'est à dire n'importe quelle surface à l'exception de la surface extérieure 13. Ce même concept peut ainsi être implémenté sur des parois formées de plus de deux couches. Toutes les couches positionnées au-dessus de la partie de surface avec un état de surface particulier sont dans un matériau suffisamment transparent ou translucide pour permettre la visualisation de la décoration depuis l'extérieur. Ainsi, l'invention peut être implémentée avec des matériaux transparents ou simplement translucides, du plus brillant au plus opaque, tant que la structuration de surface reste visible depuis l'extérieur.

Enfin, les figures 7 et 8 illustrent des variantes qui combinent plusieurs décorations combinées dans des plans différents, afin de créer des effets de profondeur ou de relief. Pour cela, des mêmes dessins peuvent être reproduits sur deux surfaces distinctes des couches formant la paroi, être décalés ou parfaitement superposés, obtenus par la même technique ou par des techniques de décoration différentes. Des dessins différents peuvent aussi être partiellement superposés dans des plans différents. La figure 7 correspond à la solution de la figure 5 sur laquelle une décoration supplémentaire 12 a été réalisée dans la même zone sur la couche extérieure 13 de la paroi de la chaussure. La figure 8 illustre cette même solution incluant de plus une troisième décoration 22 sur la face intérieure de la paroi de la chaussure. Toute autre combinaison est envisageable.

Sur ces figures 7 et 8, les décorations additionnelles combinées ont aussi été réalisées par des structurations particulières de l'état de surface de couches de la paroi de la chaussure. Bien sûr, ces décorations pourraient aussi être réalisées avec toute autre technique de l'art antérieur, sans sortir du cadre de l'invention.

L'invention concerne en outre le procédé de fabrication d'une partie de chaussure avec décoration, qui comprend les deux étapes essentielles suivantes :
- injection d'une partie de chaussure avec un premier matériau plastique formant la couche intérieure 21 de la paroi de la chaussure, dont une partie de surface au moins comprend une structuration de surface particulière,
- sur-injection d'un second matériau plastique transparent ou translucide, formant la couche extérieure 1 de la paroi de la chaussure.

La partie de surface au moins comprenant une structuration de surface particulière peut être obtenue par un état de surface particulier correspondant au moule de fabrication.

La figure 10 illustre une seconde étape d'injection d'un second matériau plastique sur la première couche 21, obtenue selon le procédé illustré sur la figure 9 et toujours disposée autour du moule intérieur 9. Ce moule recouvert du premier matériau plastique injecté est associé à une seconde partie 18 de moule extérieur, qui délimite un espace 17 entre la première couche 21 et le moule 18, dans lequel un second matériau plastique est injecté afin de réaliser la seconde couche extérieure 1 de la chaussure. Ce moule 18 comprend une zone rugueuse 12" disposé au-dessus d'un espace 1" dans la zone au moins partiellement superposée aux décorations 22 et 32 obtenues lors de la première injection. Cette solution permet ainsi d'atteindre le résultat illustré sur la figure 8. Bien entendu, le moule sera facilement adapté afin d'obtenir toute autre combinaison de décoration par état de surface.

Par ce procédé, il apparaît donc que le second matériau plastique injecté, choisi compatible avec le premier matériau plastique, épouse parfaitement l'état de surface de la couche précédente, permettant d'obtenir une adhésion ou soudure parfaite des deux couches sur toute leur surface de contact pour former une paroi de deux couches totalement solidaires, à la propriété mécanique équivalente à celle qu'elle aurait avec la structure différente obtenue par un procédé habituel de fabrication de chaussure par bi-injections.

Cette solution permet donc d'obtenir une partie de chaussure de sport comprenant les avantages de la double injection, permettant de réaliser une paroi de chaussure en deux couches soudées par la combinaison de deux matériaux plastiques compatibles, aux caractéristiques mécaniques différentes et complémentaires, tout en ayant de plus une décoration ou au moins procurant un effet esthétique attrayant, sans ajout d'une étape supplémentaire de décoration. La solution retenue permet l'utilisation de n'importe quelle épaisseur, même très fine, du second matériau transparent ou translucide qui recouvre la première couche pour remplir la fonction de protection de la décoration des agressions extérieures. En variante, cette solution s'adapte aussi à d'autres types de paroi de chaussure qui seraient par exemple obtenues par plus de deux injections.

Finalement, ce second mode de réalisation atteint aussi les objets recherchés et présente les avantages déjà explicités ci-dessus. Il faut ajouter que le procédé de fabrication d'une partie de chaussure de sport intégrant une décoration selon le concept de l'invention permet sa réalisation quasi automatique sur la paroi continue de la chaussure. Il se distingue ainsi clairement d'une solution insatisfaisante qui consisterait à réaliser une ouverture spécifique de la paroi pour former une fenêtre au sein de la chaussure dans laquelle on mettrait en place la décoration, ce qui formerait ainsi une discontinuité de la paroi de la chaussure qui nuirait à ses performances mécaniques, la fenêtre n'ayant qu'une fonction esthétique au détriment de la rigidité et de la performance mécanique de la paroi, le tout par un procédé beaucoup plus complexe.

Selon une variante de réalisation intéressante, le matériau plastique transparent ou translucide peut contenir une coloration, et présenter ainsi une couleur différente selon son épaisseur, devenant plus foncé quand son épaisseur augmente. Cela permet d'ajouter un effet esthétique complémentaire en combinaison avec celui de l'invention.

La décoration selon l'invention, telle que décrite précédemment, peut être combinée avec les procédés classiques de décoration de l'art antérieur, basés sur des décorations de la surface extérieure des parois des chaussures, comme des marquages à chaud, l'ajout d'un support de décoration disposé sur la face intérieure de la paroi transparente de la chaussure, par un moyen adhésif par exemple, l'ajout d'un support de décoration disposé entre les deux couches injectées de la paroi de la chaussure, ou la combinaison, en superposition sur des surfaces différentes ou en juxtaposition sur la même surface, avec des effets esthétiques produits par des reliefs de type nervures ou rainures, sur une des surfaces d'une couche de la paroi de la chaussure. Il est ainsi possible de démultiplier grandement les effets esthétiques par ces différentes combinaisons.

En variante, le concept de l'invention peut permettre de former toute forme ou décoration, qui peut être plus qu'une simple décoration et peut contenir des informations utiles, comme la marque de la chaussure, sa pointure...

La ou les couches mentionnées de la paroi de la chaussure peuvent être dans tout matériau plastique habituellement utilisé dans le domaine des chaussures de sport, comme un polyuréthane de rigidité comprise entre 50 et 66 shd. Toutefois, selon une variante de réalisation, la paroi de la chaussure peut comprendre un polycarbonate transparent dans la zone de structuration particulière de surface selon le concept de l'invention, pour bénéficier de l'avantage de ses propriétés de grande transparence et de rigidité. Un matériau compatible avec les solutions de décoration par sublimation peut aussi être utilisé pour permettre la combinaison de la sublimation avec la décoration par état de surface selon l'invention.

La paroi de la chaussure peut être complètement transparente ou translucide, même dans les cas « multicouches » pour créer un effet esthétique à l'intérieur de la chaussure et un effet supplémentaire à l'extérieur en permettant de visualiser au moins une partie du chausson, disposé à l'intérieur de la coque rigide de la chaussure décorée par état de surface selon l'invention.

La paroi extérieure transparente superposée à la décoration par état de surface peut s'étendre sur une grande surface ou être réduite à une plus petite surface de la taille d'une simple fenêtre sur la surface de la paroi globale de la chaussure, obtenue par exemple par une injection limitée à une petite surface.

L'invention peut être implémentée sur toute chaussure de sport nécessitant une partie rigide, comme par exemple une chaussure de ski, sur sa coque et/ou son collier et/ou sa semelle par exemple, un patin à glace ou à roulettes, ou une chaussure de surf des neiges.

## Revendications

1. Partie de chaussure de sport dont la paroi comprend au moins une couche extérieure (1) en un matériau transparent ou translucide, au moins une partie (2 ; 32 ; 22) de la surface intérieure (3 ; 33 ; 23), non directement en contact avec l'extérieur, d'une couche (1 ; 21) de ladite paroi comprenant une structuration de surface particulière, visible depuis l'extérieur de la paroi de la chaussure au travers d'au moins la couche extérieure (1) transparente ou translucide, **caractérisée en ce que** la structuration forme une partie rugueuse délimitée par des surfaces lisses (4).

2. Partie de chaussure de sport selon la revendication précédente, **caractérisée en ce que** la structuration de surface particulière consiste en un état de surface particulier s'étendant sur au maximum quelques centièmes de millimètre, voire quelques dixièmes, de l'épaisseur de la couche (1 ; 21).

3. Partie de chaussure de sport selon l'une des revendications précédentes, **caractérisée en ce que** la paroi ne comprend qu'une seule couche (1) de matériau plastique transparent ou translucide comprenant une structuration de surface particulière sur au moins une partie de sa surface intérieure (3).

4. Partie de chaussure de sport selon l'une des revendications 1 ou 2, **caractérisée en ce que** la paroi comprend deux couches (1, 21) superposées de matériaux plastiques.

5. Partie de chaussure de sport selon la revendication précédente, **caractérisée en ce que** la couche extérieure transparente ou translucide (1) comprend une structuration de surface particulière sur au moins une partie de sa surface intérieure (3).

6. Partie de chaussure de sport selon la revendication 4 ou 5, **caractérisée en ce que** la couche intérieure (21) comprend une structuration de surface particulière sur au moins une partie de sa surface en vis à vis avec la surface intérieure (3) de la couche extérieure (1).

7. Partie de chaussure de sport selon l'une des revendications 4 à 6, **caractérisée en ce que** la couche intérieure (21) est aussi transparente ou translucide et comprend une structuration de surface particulière sur au moins une partie de sa surface intérieure (23) orientée du côté du pied ou du chausson d'un utilisateur.

8. Partie de chaussure de sport (1) selon l'une des revendications précédentes, **caractérisée en ce qu'**elle comprend au moins deux parties (12, 2 ; 12, 32 ; 12, 32, 22) comprenant des structurations de surface particulière, combinées sur deux surfaces distinctes de couche (1 ; 21) de la paroi de la chaussure pour former un effet de profondeur.

9. Partie de chaussure de sport (1) selon l'une des revendications précédentes, **caractérisée en ce qu'**elle comprend en outre au moins une surface non directement en contact avec l'extérieur (3 ; 33, 23) d'une couche (1 ; 21) présentant des nervures et/ou des rainures combinées avec la surface (2 ; 32 ; 22) comprenant une structuration de surface, juxtaposées sur la même surface et/ou combinées sur une surface distincte.

10. Partie de chaussure de sport (1) selon l'une des revendications précédentes, **caractérisée en ce qu'**elle comprend en outre au moins une autre décoration réalisée par marquage, par adhésion d'un support de décoration, par sublimation, au moins partiellement combinée à la décoration par structuration de surface sur une surface distincte ou sur la même surface d'une couche de la paroi de chaussure.

11. Partie de chaussure de sport (1) selon l'une des revendications précédentes, **caractérisée en ce que** la paroi de la chaussure comprend un polycarbonate transparent.

12. Partie de chaussure de sport (1) selon l'une des revendications précédentes, **caractérisée en ce que** la surface comprenant une structuration de surface forme un dessin se distinguant de l'état de surface avoisinant.

13. Partie de chaussure de sport (1) selon l'une des revendications précédentes, **caractérisée en ce que** la structuration de surface formant la décoration (2 ; 32 ; 22) consiste en une surface rugueuse entourée d'une surface sensiblement lisse ou inversement.

14. Chaussure de ski **caractérisée en ce qu'**elle comprend une partie de chaussure selon une des revendications précédentes.

15. Procédé de fabrication d'une partie de chaussure de sport selon l'une des revendications 1 à 13, **caractérisé en ce qu'**il comprend l'étape suivante :
- injection d'un matériau plastique transparent ou translucide dans un moule (8, 9) dont une zone (1') comprend une structuration de surface particulière (2'), qui forme une partie rugueuse délimitée par des surfaces lisses, afin de produire une structuration particulière sur au moins une partie de surface (3) non directement en contact avec l'extérieur de la couche de matériau plastique ainsi formée.

16. Procédé de fabrication d'une partie de chaussure de sport selon l'une des revendications 1 à 13, **caractérisé en ce qu'**il comprend les étapes suivantes :
- injection d'une partie de chaussure avec un premier matériau plastique formant une couche intérieure (21) de la paroi de la chaussure orientée du côté du pied ou du chausson d'un utilisateur,
- sur-injection d'un second matériau plastique transparent ou translucide, formant la couche extérieure (1) de la paroi de la chaussure, ce second matériau plastique étant compatible avec le premier matériau plastique pour former une paroi de partie de chaussure composée de deux couches (1, 21) soudées,
- le moule comprenant une structuration de surface particulière, qui forme une partie rugueuse délimitée par des surfaces lisses, pour former sur au moins une partie d'une surface (3, 23, 33) non directement en contact avec l'extérieur une structuration de surface particulière, visible depuis l'extérieur par la transparence d'au moins une partie de la paroi de la chaussure.

17. Procédé de fabrication d'une partie de chaussure de sport selon la revendication 15 ou 16, **caractérisé en ce qu'**il comprend l'étape suivante :
- réalisation d'un état de surface particulier d'une surface du moule (8, 9 ; 8, 9, 18) pour former une structuration de surface particulière (2') par sablage, usinage ou attaque chimique.

## Claims

1. Part of a sports footwear wherein the wall comprises at least one outer layer (1) of a transparent or translucent material, at least a fraction (2; 32; 22) of the inner surface (3; 33; 23) that is not directly in contact with the exterior, of a layer (1; 21) of said wall comprising a particular surface structuring that is visible from the exterior of the shoe wall through at least the transparent or translucent outer layer (1), **characterised in that** the structuring forms a rough zone confined by smooth surfaces (4).

2. Part of a sports footwear according to claim 1, **characterised in that** the particular surface structuring consists in a particular surface state extending at most on some hundredths or even some tenths of a millimetre over the thickness of the layer (1; 21).

3. Part of a sports footwear according to one of the preceding claims, **characterised in that** the wall comprises only one layer (1) of a transparent or translucent plastics material bearing a particular surface structuring on at least one zone of its inner surface (3).

4. Part of a sports footwear according to one of claims 1 and 2, **characterised in that** the wall comprises two superimposed layers (1, 21) composed of plastics materials.

5. Part of a sports footwear according to the preceding claim, **characterised in that** the transparent or translucent external layer (1) comprises a particular surface structuring on at least a fraction of its inner surface (3).

6. Part of a sports footwear according to claim 4 or 5, **characterised in that** the inner layer (21) includes a particular surface structuring on at least one zone of its surface opposed to the inner surface (3) of the outer layer (1).

7. Part of a sports footwear according to any one of claims 4 to 6, **characterised in that** the inner layer (21) is also transparent or translucent and comprises a particular surface structuring on at least a fraction of its inner surface (23) that is oriented against the foot or the sock liner of a user.

8. Part of a sports footwear (1) according to any one of the preceding claims, **characterised in that** it includes at least two fractions (12, 2; 12, 32; 12, 32, 22) comprising particular surface structuring, combined on two distinct surfaces of the layer (1; 21) of the shoe wall in order to form a deep effect.

9. Part of a sports footwear (1) according to any one of the preceding claims, **characterised in that** it further includes at least one surface that is not directly in contact with the exterior (3; 33, 23) of a layer (1; 21) having ribs and/or grooves combined with the surface (2; 32; 22) comprising a surface structuring and placed side by side on the same surface and/or combined on a distinct surface.

10. Part of a sports footwear (1) according to any one of the preceding claims, **characterised in that** it further includes at least one other decoration obtained by marking, by adhesion of a decoration support or by sublimation and at least partially combined with the decoration by surface structuring on a distinct surface or on the same surface of a wall layer of the shoe.

11. Part of a sports footwear (1) according to any one of the preceding claims, **characterised in that** the wall of the shoe includes a transparent polycarbonate.

12. Part of a sports footwear (1) according to any one of the preceding claims, **characterised in that** the surface that comprises a superficial structuring forms a pattern which is different from the state of the neighbouring surface.

13. Part of a sports footwear (1) according to any one of the preceding claims, **characterised in that** the surface structuring which forms the decoration (2; 32; 22) is a rough surface surrounded by an essentially smooth surface, or vice versa.

14. Ski shoe, **characterised in that** it comprises a part of a footwear according to any one of the preceding claims.

15. Method for manufacturing a part of a sports shoe according to any one of claims 1 to 13, **characterised in that** it includes the following step:
- injection moulding of a transparent or translucent plastics material in a mould (8, 9) wherein a region (1') comprises a particular surface structuring (2') which forms a rough fraction confined by smooth surfaces in order to form a particular structuring on at least one fraction of the surface (3) that is not in direct contact with the exterior of the layer of the plastics material formed in such a manner.

16. Method for manufacturing a part of a sports shoe according to any one of claims 1 to 13, **characterised in that** it includes the following steps:
- injection moulding of a part of a shoe with the use of a first plastics material that forms an inner layer (21) of the shoe wall which is oriented against the foot or the sock liner of a user,
- back injection moulding with the use of a second plastics material being transparent or translucent that forms the external layer (1) of the shoe wall, this second plastics material being compatible with the first plastics material in order to form a wall of the shoe part composed of two welded layers (1, 21),
- the mould comprising a particular surface structuring which forms a rough region confined by smooth surfaces in order to produce on at least a fraction of a surface (3, 23, 33) which is not directly in contact with the exterior, a particular surface structuring and which can be seen from the exterior due to the transparency of at least a fraction of the wall of the shoe.

17. Method for manufacturing a part of a sports shoe according to claim 15 or 16, **characterised in that** it comprises the following step:
- establishing a particular state of the surface of the mould (8, 9; 8, 9, 18) in order to produce a particular surface structuring (2') by sandblasting, machining or chemical attack.

## Patentansprüche

1. Sportschuhteil, dessen Wandung mindestens eine Aussenschicht (1) aus einem durchsichtigen oder durchscheinenden Material aufweist, wobei mindestens ein Teil (2; 32; 22) der Innenfläche (3; 33; 23), einer Schicht (1; 21) der genannten Wandung welcher nicht unmittelbar in Kontakt mit dem Äusseren ist, eine besondere Strukturierung der Oberfläche aufweist, welche vom Äusseren der Wandung des Schuhs her durch mindestens eine durchsichtige oder durchscheinende Aussenschicht (1) hindurch sichtbar ist, **dadurch gekennzeichnet, dass** die Strukturierung einen rauhen Bereich bildet, welcher von glatten Flächenbereichen (4) eingegrenzt ist.

2. Sportschuhteil nach vorstehendem Anspruch, **dadurch gekennzeichnet, dass** die besondere Strukturierung der Oberfläche aus einem besonderen Oberflächenzustand besteht, der sich höchstens über einige Hundertstel Millimeter bis zu einigen Zehntel Millimetern der Dicke der Schicht (1; 21) erstreckt.

3. Sportschuhteil nach einem der vorstehenden Ansprüche, **dadurch gekennzeichnet, dass** die Wandung nur eine einzige Schicht (1) aus durchsichtigem oder durchscheinendem Kunststoff aufweist, wobei die Schicht mit einer besonderen Oberflächenstrukturierung auf mindestens einem Teil ihrer inneren Oberfläche (3) versehen ist.

4. Sportschuhteil nach einem der Ansprüche 1 und 2, **dadurch gekennzeichnet, dass** die Wandung zwei Schichten (1, 21) aufweist, die aus einem Kunststoff bestehen und übereinander angeordnet sind.

5. Sportschuhteil nach vorstehendem Anspruch, **dadurch gekennzeichnet, dass** die durchsichtige oder durchscheinende äussere Schicht (1) eine besondere Oberflächenstrukturierung auf mindestens einem Teil ihrer inneren Oberfläche (3) aufweist.

6. Sportschuhteil nach Anspruch 4 oder 5, **dadurch gekennzeichnet, dass** die innere Schicht (21) eine besondere Oberflächenstrukturierung auf mindestens einem Teil eines Bereiches ihrer Oberfläche aufweist, welcher der Innenfläche (3) der Aussenschicht (1) gegenübersteht.

7. Sportschuhteil nach einem der Ansprüche 4 bis 6, **dadurch gekennzeichnet, dass** die innere Schicht (21) ebenfalls durchsichtig oder durchscheinend ist und eine besondere Oberflächenstrukturierung auf mindestens einem Teil ihrer Innenfläche (23) aufweist, die auf den Fuss bzw. die Socke eines Benutzers gerichtet ist.

8. Sportschuhteil (1) nach einem der vorstehenden Ansprüche, **dadurch gekennzeichnet, dass** es aus mindestens zwei Teilbereichen (12, 2; 12, 32; 12, 32, 22) zusammengesetzt ist, welche besondere Oberflächenstrukturierungen aufweisen, die auf zwei voneinander getrennten Schichtflächen (1; 21) der Wandung des Schuhs miteinander kombiniert sind, um eine Tiefenwirkung hervorzurufen.

9. Sportschuhteil (1) nach einem der vorstehenden Ansprüche, **dadurch gekennzeichnet, dass** es zudem mindestens eine Oberfläche aufweist, die nicht unmittelbar in Kontakt mit dem Äusseren (3; 33, 23) einer Schicht (1; 21) steht, welche Rippen und/oder Nuten aufweist, die mit der Fläche (2; 32; 22) kombiniert sind, welche eine Oberflächenstrukturierung aufweist, die auf der gleichen Oberfläche benachbart angeordnet sind, nämlich die Rippen und/oder Nuten, und/oder auf einer besonderen getrennten Oberfläche kombiniert sind.

10. Sportschuhteil (1) nach einem der vorstehenden Ansprüche, **dadurch gekennzeichnet, dass** es zusätzlich mindestens eine weitere Dekoration aufweist, die durch Markierung, durch Ankleben eines Dekorationsträgers oder durch Sublimation erzeugt ist, und die mindestens teilweise mit der Dekoration über eine Oberflächenstrukturierung auf einer getrennten Fläche oder auf der gleichen Fläche auf der Schicht der Wandung des Schuhes kombiniert ist.

11. Sportschuhteil (1) nach einem der vorstehenden Ansprüche, **dadurch gekennzeichnet, dass** die Wandung des Schuhs aus einem durchsichtigen Polycarbonat besteht.

12. Sportschuhteil (1) nach einem der vorstehenden Ansprüche, **dadurch gekennzeichnet, dass** die Oberfläche, welche eine Oberflächenstrukturierung aufweist, ein Muster bildet, das sich vom Zustand der benachbarten Fläche unterscheidet.

13. Sportschuhteil (1) nach einem der vorstehenden Ansprüche, **dadurch gekennzeichnet, dass** die Oberflächenstrukturierung, welche die Dekoration (2; 32; 22) bildet, aus einer rauhen Fläche besteht, welche von einer im Wesentlichen glatten Oberfläche umgeben ist, oder umgekehrt.

14. Skischuh, **dadurch gekennzeichnet, dass** er einen Sportschuhteil nach einem der vorstehenden Ansprüche aufweist.

15. Verfahren zur Herstellung eines Sportschuhteils nach einem der Ansprüche 1 bis 13, **dadurch gekennzeichnet, dass** es folgenden Verfahrensschritt aufweist:
- Einspritzen eines durchsichtigen oder durchscheinenden Kunststoffs in eine Form (8, 9), bei der ein Bereich (1') eine besondere Oberflächenstrukturierung (2') aufweist, die einen rauhen Bereich bildet, der durch umgebende glatte Flächen eingegrenzt ist, um eine besondere Strukturierung auf mindestens einem Teil der Fläche (3) zu erzeugen, der nicht unmittelbar in Berührung mit dem Äusseren der Schicht aus Kunststoff steht, die auf diese Weise gebildet wird.

16. Verfahren zur Herstellung eines Sportschuhteils nach einem der Ansprüche 1 bis 13, **dadurch gekennzeichnet, dass** es die folgenden Schritte aufweist:
- Spritzgiessen eines Teils des Schuhs unter Verwendung eines ersten Kunststoffes, welcher eine innere Schicht (21) der Wandung des Schuhs erzeugt, die sich in Richtung des Fusses oder der Socke des Benutzers orientiert,
- Hinterspritzen mit einem zweiten Kunststoff, der durchsichtig oder durchscheinend ist und die äussere Schicht (1) der Wandung des Schuhs bildet, wobei dieser zweite Kunststoff mit dem ersten Kunststoff verträglich ist und eine Wandung des Schuhteils bildet, das aus zwei miteinander verschweissten Schichten (1, 21) zusammengesetzt ist,
- wobei die Form eine besondere Flächenstrukturierung aufweist, welche einen rauhen Bereich bildet, der durch glatte Flächen begrenzt ist, und um auf mindestens einem Teil einer Oberfläche (3, 23, 33), die nicht unmittelbar in Berührung mit dem Äusseren ist, eine besondere Oberflächenstrukturierung zu erzeugen, die infolge der Durchsichtigkeit mindestens eines Teils der Wandung des Schuhs von aussen sichtbar ist.

17. Verfahren zur Herstellung eines Sportschuhteils nach Anspruch 15 oder 16, **dadurch gekennzeichnet, dass** es den folgenden Schritt aufweist:
- Erzeugung eines besonderen Oberflächenzustands einer Oberfläche der Form (8, 9; 8, 9, 18), um eine besondere Oberflächenstrukturierung (2') durch Sandstrahlen, mechanische Bearbeitung oder chemischen Angriff zu bilden.
